# EUROPEAN PATENT SPECIFICATION

(11) **EP 2 611 230 B1**
(45) Date of publication and mention of the grant of the patent: **16.10.2019**
(21) Application number: 11405379.6
(22) Date of filing: 29.12.2011
(51) Int. Cl.: H04W 16/24, H04W 16/12

(54) **Method for deploying a cellular communication network**
Verfahren zur Anwendung eines zellularen Netzwerks
Procédé de déploiement d'un réseau de communication cellulaire

(43) Date of publication of application: 03.07.2013
(73) Proprietor: Swisscom AG, 3050 Bern (CH)
(72) Inventor: Zasowski, Thomas, 8053 Zürich (CH); Kuhn, Marc, 8044 Gockhausen (CH); Rolny, Raphael, 8044 Zürich (CH)
(74) Representative: Frei Patent Attorneys

(56) References cited:
- WO-A1-2010/060185
- WO-A1-2011/100672
- US-A1- 2011 111 783
- US-A1- 2011 124 345

## Description

The invention relates to the field of wireless mobile communications, and in particular to a method for deploying a cellular communication network, as described in the preamble of the corresponding independent claim 1.

Existing cellular networks usually have network cells each comprising a base station located at a central position inside the cell, covering the area of the cell for communicating with mobile devices inside the cell. Required data rates in cellular networks are constantly increasing, but today's cellular networks are planned such that interference is minimized between adjacent base stations. With such current mobile network concepts and existing systems it is difficult to cope with the very high throughput demand in future. There is a need for a method for deploying a cellular communication network, given an existing network structure, in particular with given base station locations, that overcomes the present limitations and allows to increase data rates and/or other performance parameters.

One concept to achieve much higher throughput is the usage of cooperative networks. Cooperative concepts are well known in the academic world. Cooperation means that several transceivers, e.g. base stations, can exchange data on propagation conditions, channel, interference, transmit power, etc. to optimize the transmission and reception to one or more transceivers, e.g. mobile phones. This optimization is usually done to improve quality of service (QoS), e.g. throughput or reliability, but also other optimization criteria can be applied. However, it is not economically viable to establish a cooperative network from scratch where an existing network - which is not designed for cooperation - is already in place.

WO 2010/060185 A1 discloses a method and system for identifying cell clusters within a coordinated multi-point network. The network and a mobile user device together determine a set of cells that is to communicate with the user device. In essence, this is done by selecting cells and base stations from which the user device receives the highest power. The method does not involve a physical reconfiguration of the network, such as (re)arrangement of antennas. Base stations can comprise multiple antennas, e.g. for enabling spatial diversity.

US 2011/0124345 A1 discloses a very similar method for selecting a base station or a cell clustering group to participate in communication with a user device.

WO 2011/100672 A1 describes a system and method for receiving a channel state information reference signal. For this purpose, groups of network cells can be formed that interfere with each other.

US 2011/0111783 A1 discloses a fractional frequency reuse deployment method for a cellular system. Sectors comprising one base station with three antennas each, in a clover-leaf arrangement and operating at different frequencies, are combined such that the area covered by any antenna never is adjacent to an area covered by an antenna operating at the same frequency.

It is therefore an object of the invention to create a method for deploying a cellular communication network of the type mentioned initially, which overcomes the disadvantages mentioned above.

These objects are achieved by a method for deploying a cellular communication network according to the corresponding independent claim 1.

The method serves to deploy a cellular communication network, comprising reconfiguring a cellular communication network or mobile radio communication system, wherein the cellular communication network in an initial state comprises cells, each cell comprising a base station located at a central position inside the cell, with one or more (transmitting and receiving) antennas arranged to cover the area of the cell (typically by emanating radiation in all directions around the base station) for communicating with communication devices, e.g. mobile communication devices, inside the cell. The method comprises
▪ selecting a plurality of cells that are not adjacent to each other and using these cells as central cells for the following steps;
▪ for each central cell
   ∘ in the base stations of (one or more) cells that are adjacent to the central cell, arranging one or more antennas to be directed (that is, to emanate radiation in a limited range of directions and to receive radiation from this limited range) towards the central cell, that is, for example, at least approximately towards the centre of a super-cell.
   ∘ thereby defining the super-cell comprising the central cell and part of (typically each of) the adjacent cells, the outline of the super-cell being defined by the base stations of the adjacent cells, and antennas of the super-cell comprising the antennas of the adjacent cells that are directed towards the central cell, and optionally also an antenna or antenna array of the central cell;
   ∘ providing a common processing system to coordinate the emanation of radiation by the antennas of the super-cell so as to communicate with a plurality of communication devices located within the super-cell;
   ∘ wherein the signals from the antennas of the super-cell use at least the same channel resources.

In a cooperative network, two or more transceiver nodes share their information to jointly transmit and/or receive, e.g. jointly as a virtual antenna array. This enables them, for example, to obtain higher data rates and diversity than they could have individually.

In more detail, cooperation means that several, usually geographically separated base stations with transceivers exchange data on data symbols being transmitted, and/or on propagation conditions, channel properties, interference, transmitting power etc. to optimise the transmission to one or more receivers, and/or reception from one or more transmitters, these receivers and transmitters typically being mobile communication devices. This optimization can be with respect to criteria such as quality of service (for example, reliability or data throughput), or with respect to broadcasting power or other criteria, or to an optimisation in view of combined criteria.

The terms "antenna" and "antenna array" are used interchangeably in this document, denoting either a single physical antenna, or a group of physically distinct antennas located at the same base station, that act together as one transceiver antenna. Thus, when enhancing an existing cellular network with a cooperative approach, a change in the network structure takes place. To allow for cooperation between different, i.e. geographically separated, base stations, their RF resources may overlap at least in one dimension or domain of channel resources, these domains being frequency, time and/or code. For example, cooperating base stations can use the same frequency band, e.g. for LTE (Long Term Evolution, a 4G standard) and other OFDM (Orthogonal frequency-division multiplexing) systems, or the same code, e.g. for UMTS (Universal Mobile Telecommunications System) and other CDMA (Code division multiple access) systems.

In the resulting reconfigured cellular communication network or mobile radio communication system, a number of base stations are adapted to form a super-cell. Rather than have each base station serve the area of one of the original cells only, each base station is configured to cooperate with the others of the same super-cell. This is done by splitting up the original cell into two, three or more subcells - depending on the placement of the base stations, and combining the subcells of different original cells to form the super-cell. Subcells may also be referred to as antenna sectors, or simply sectors. The antenna sectors of the base stations are oriented in such a way that coverage inside the super-cell can be optimised and interference towards neighbouring super-cells can be minimised. Typically, but not mandatorily, the super-cell comprises also one of the original cells that is not split up to serve a plurality of super-cells. Frequently, this is one of the central cells. In this manner, the coverage area of a super-cell may be made much larger than the typical coverage area of the individual original cells. The super-cell coverage area is thus served "from the outside" (i.e. from the boundary of the super-cell), instead of "from the inside" (i.e. from a location approximately centrally located within the cell) as in conventional networks.

The present approach thus improves cell cooperation benefits achievable over conventional cellular networks, including, but not limited to, throughput and other QoS (quality of service) optimisations. In particular, in accordance with various embodiments of the invention, the performance available to a cellular communication device may improve significantly at or near the cell edge.

Further in accordance with various embodiments of the invention, base stations are placed around the coverage area of the super-cell and antenna patterns are directed such that by cooperative methods the QoS in a super-cell is improved, inter super-cell interference is reduced and/or - depending on optimisation goals - the number of base stations can be reduced. All base station sectors serving the coverage area of a super-cell use at least some of the same channel resources, i.e. they are not separated in at least one of the frequency,time, and/or code domain. For example, the base stations are enabled to cooperate by using the same frequency band or bands. Separating communication channels to different mobile devices can then be effected by separation in the time domain,code domain, or other multiple access protocols. This will be a typical setup, however it is in principle also possible, for example, that the base stations of a cell share resources in the time domain and/or code domain, and separate the users in the frequency domain.

Different options for network operations are possible in accordance with various embodiments of the invention. These options are related to one or more of at least the following different cost and performance parameters:
▪ The central base station maybe eliminated, freeing up resources.
▪ Network capacity with regard to the number of mobile users/devices may be increased.
▪ Network capacity with regard to the data rate provided to individual users or aggregated data rates may be increased.
▪ More homogeneous data rate distribution across the cellular coverage area, i.e. mitigating the effect of distance dependent data rate reduction may be achieved.
▪ Failure tolerance of base station or antenna failure can be increased.
▪ Transmitting power may be decreased while achieving the same or similar performance of a conventional network.
Each of these exemplary options, or a combination thereof, can be implemented. As a reference point for the improvement of the cost and performance parameters mentioned above, for example, the network in its original, initial state can be used, that is, the network with the original distribution of non-cooperating base stations, each base station corresponding to the centre of one cell.

For example, in an exemplary embodiment, the antennas of the super-cell can be used to increase the data rate or to optimise the distribution of the data rate in communicating to the one or more communication devices inside the super-cell while maintaining essentially the same transmission power as in the initial state. Here, the transmission power typically is the total transmission power emitted by the base stations to serve a particular geographic area.

For example, in an exemplary embodiment, the transmitting power of the antennas of the super-cell can be reduced, in particular while maintaining essentially the same QoS as in the initial state.

In an exemplary embodiment, the central cell of a super-cell is not required to transmit or receive RF signals because coverage may be assured through the cells adjacent to the central cell. In other words, the antenna of the central cell is disabled and not needed for communication in the new network based on the cooperating edge antennas. However, the central cell, rather than being physically removed, may be used for another network, for example.

Placing base stations at cell edges, the super-cell concept allows reducing the number of base stations while improving QoS by applying cooperative concepts. By reducing the number of base stations in the super-cell, the inter super-cell interference can be further reduced as compared to state-of-the-art cell planning approaches.

The RF coverage area of a super-cell may be significantly larger than that of a single one of the original cells, depending, inter alia, on the number and geometry chosen to form the super-cell. For example, the area of the super-cell is three times the area of a single original cell. Consequently, for a moving user, fewer handovers are required.

In an embodiment, in a super-cell, the antenna or antenna array of the central cell is an omni directional antenna or antenna array. That is, the central antenna or array of antennas of the central cell, comprising e.g. three antennas, each covering a ca. 120° sector, operates with at least some of the same channel resources as the antennas pointing inwards from the border of the super-cell. This allows to reuse the base station in the central cell, incorporating it in the new super-cell, allowing for one or more of increasing network capacity, increasing failure tolerance and/or reducing transmitting power.

In an embodiment, in a super-cell, the antennas of the super-cell are used to increase the data rate or to optimise the distribution of the data rate in communicating to a plurality of mobile devices inside the super-cell. In one embodiment, this is done by maximising the minimum data rate of communication over a plurality of the user devices.

In an embodiment, in a super-cell, the antenna or antenna array of the super-cell, in particular the antennas of the central cells in cooperation with the antennas of the edge base stations are used to increase failure tolerance within the super-cell.

As a result, a cooperative arrangement and operation of the antennas of the super-cell, failure of a single unit such as an antenna or base station of the super cell is less significant than in a conventional cellular network. In contrast, when a base station in a conventional network is not operational, service in the corresponding cell will be significantly compromised. Due to the cooperative operation, adjacent antennas of the same super-cell can provide coverage at the location of the failed unit, optionally by increasing their power output and/or relaxing QoS requirements and/or adapting an alternative cooperation scheme. This can be done both when the central base station has been kept operating in the cooperating system or when it has been removed therefrom. Further beneficial and cost reducing consequences are that replacements of failed network components do not have to be put in place immediately, and consequently less reliable hardware may be deployed, reducing network operating cost while maintaining the same or similar reliability compared to a conventional network.

In an embodiment, the transmitting power of the antennas of the super-cell is reduced,allowing to adhere to more stringent restrictions on power emission, while maintaining or increasing QoS.

Further preferred embodiments are evident from the dependent patent claims.

The subject matter of the invention will be explained in more detail in the following text with reference to preferred exemplary embodiments which are illustrated in the attached drawings, which schematically show:
- Figure 1: a cellular communication network in an initial state;
- Figure 2: a cellular communication network in a reconfigured state;
- Figure 3: general shapes of super-cells; and
- Figure 4: antennas of a super-cell linked to a common processing system.

The reference symbols used in the drawings, and their meanings, are listed in summary form in the list of reference symbols. In principle, identical parts are provided with the same reference symbols in the figures.

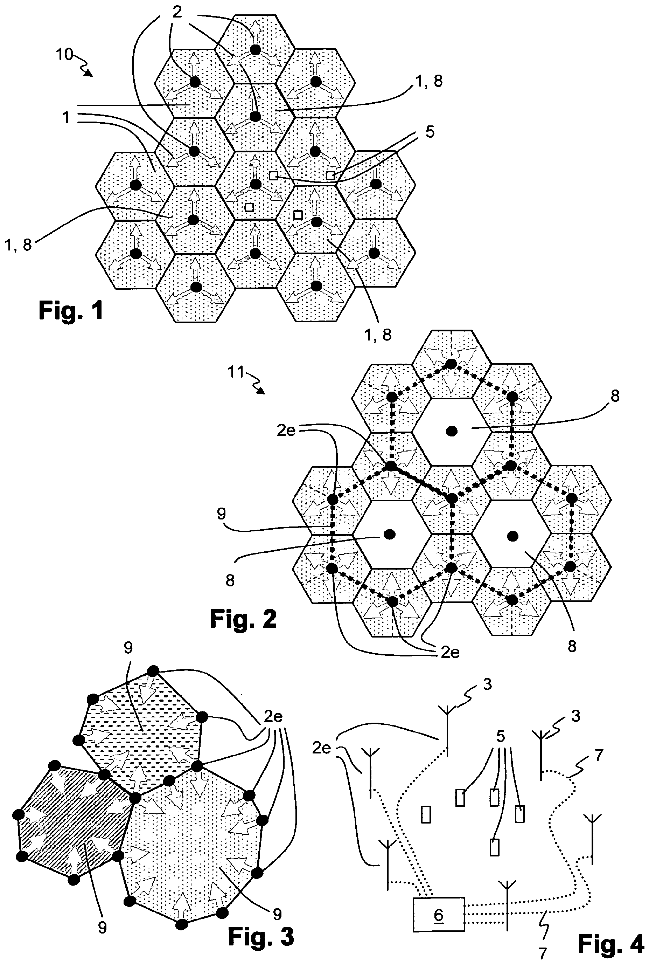

**Figure 1** shows a cellular communication network in an initial state, corresponding to a conventional network. An area is covered by, for example hexagonal cells 1, each cell 1 comprising a base station 2 essentially in the middle of the cell 1. The base station 2 comprises an omnidirectional antenna array or antenna, that is, the antenna array or antenna is configured to transmit/receive in all directions, 360° around the base station 2. Some base stations 2 can comprise antenna arrays or antennas that are not omnidirectional.

In the initial network 10, communication with mobile devices 5 within the area of each cell is achieved by means of the base station 2 of the cell. Each cell 1 uses different communication resources from adjacent cells cell 1 in order to avoid inter-cell interference. Such different communication resources are, for example, different frequency bands, different time slots or different coding schemes. Further differences in communication resources can be applied to separate the communication with different mobile devices 5.

In order to transform the initial network 10 into a reconfigured network 11, a number of non-adjacent cells are selected, and denoted as central cells 8, see also Fig. 2. Given these central cells 8, other cells 1 that surround the central cells 8 are selected. Typically, but not necessarily, these other cells 1 are adjacent to the central cells 8. Each central cell 8, together with at least a part of each of the surrounding cells, form a super-cell 9. In these other cells 1 surrounding the central cells 8, the base stations 2 are reconfigured by replacing the omnidirectional antennas by directional antennas transmitting/receiving in sectors. Antennas can but do not have to be rearranged to increase the overlapping area for cooperation. For example, whereas in the initial state antennas in adjacent cells may be oriented so as to not point toward each other, in the reconfigured state, antennas can be oriented to point towards the centre of the new super-cell 9. From the point of view of the newly established super-cell 9, these base stations 2 are edge base stations 2e on the edge of the super-cell 9. In each edge base station 2e, separate antenna (arrays) 3 (see **Figure 4**) are deployed, each antenna (array) 3 is associated with one super-cell 9, and the angle or sector covered by this antenna (array) 3 is adjusted to lie within this super-cell 9. Thus, different antenna arrays 3 of the same edge base station 2e serve different super-cells 9. By using directional antennas at the base station, interference between adjacent super-cells 9 can be minimised. This allows even for adjacent super-cells 9 to use the same channel resources, e.g., frequency bands ("reuse factor 1").

The resulting reconfigured network 11 is schematically depicted in **Figure 2 and 3****.** The main direction of the antennas at the edge base stations 2e, directed towards the centre of the respective super-cell 9, is indicated by thick arrows. For example, the super-cells can have an approximately regular hexagonal form. Note that an entire base station 2 of a central cell 8 may be eliminated for each super-cell 9, as compared to conventional networks. In this example, the base stations 2e are all equipped with three directional antenna arrays, such that each base station 2e can serve three super-cells 9 while the interference to adjacent super-cells 9 can be reduced due to the direction of the antenna patterns of the base stations 2e. Also, other geometries of super-cells 9 are possible, e.g. a network setting where three or another number of base stations 2, 2e cooperate with each other and form other geometries of super-cells 9.

A more general example of a reconfigured network layout 11 with super-cells 9 can be seen in **Figure 3****.** In this example, some base stations 2e are equipped with a single antenna array, while others have two or three arrays and thus serve two or three super-cells 9. According to one embodiment, in such a network, all super-cells 9 can communicate using the entire available bandwidth ("reuse factor 1"), while inter-super-cell interference is avoided due to the direction of the antenna patterns of the base stations 2e. Interference between super-cells 9 can be further reduced by applying FDMA, TDMA, or CDMA schemes. In contrast to conventional cellular networks where a single base station is located in the middle (or near the middle) of the area to be served, a super-cell 9 here is served by multiple edge base stations 2 that are located on the edges or on the border of the super-cell 9.

Regardless of the exact geometry of the super-cell 9 and the placement of its (edge) base stations 2e, each super-cell 9 is served by multiple (edge) base stations 2e and optionally also a central base station 2 that cooperate with each other to jointly serve the corresponding area of the super-cell 9. The same channel resources used by the signals of cooperating antennas in a super-cell are common channels of a time division multiplex, frequency division multiplex or code division multiplex communication scheme.

As shown in **Figure 4** for a single super-cell, the base stations 2e with antennas (or antenna arrays) 3 are configured to communicate with each other and optionally also a central base station (not shown) via a backbone network, utilising a common processing system 6. This common processing system 6 is to be understood as a conceptual entity: although it can be implemented by a physically centralised component, it can also be implemented by distributed computing components that are located, for example, at the base stations 2, 2e, exchanging information and working together to achieve a common processing function that achieves the cooperation between the antennas 3 of the super-cell 9. One or more inter-base-station communication links 7 are used to exchange e.g. channel information, messages, and/or other knowledge that is required to cooperatively communicate between the base stations in order to cooperatively communicate with the mobile devices 5 to be served. Based on the available knowledge, the base stations 2, 2e that correspond to the same super-cell 9 can cooperate on different levels. If high capacity links with low delay are provided between the cooperating base stations, for instance full cooperation with joint beamforming and/or joint data processing can be employed. In this case, multi-user MIMO communication between the base stations belonging to the same super-cell 9 and their corresponding mobile devices 5 can be optimised such that e.g. a minimal rate over all mobile devices 5 is maximised. This can be realised by the common processing determining precoding information for weighting the signals of the antennas of the super-cell, and then implementing this precoding at the geographically separated antennas. Also, other optimization criteria as sum-rate, throughput, and others are possible. The same super-cell setting can also be used for limited cooperation. In this case, the base stations 2, 2e can exchange limited information to coordinate their transmissions/receptions (scheduling, power allocation, time and frequency allocation) in order to reduce intra-super-cell interference and maximise desired signals, to allow soft handover, to exploit macro diversity, or others. Cooperation within a super-cell 9 can also be realised by multihop communication schemes with the use of additional relays or femtocells. Base stations 2, 2e can also be replaced by relays that communicate wirelessly with base stations 2, 2e in order to exchange the required information for the transmission/reception with mobile devices 5.

While the invention has been described in present preferred embodiments of the invention, it is distinctly understood that the invention is not limited thereto, but may be otherwise variously embodied and practised.

## Claims

1. A method for deploying a cellular communication network comprising reconfiguring a cellular communication network, wherein the cellular communication network in an initial state (10) comprises cells (1), each cell (1) comprising a base station (2) located in an essentially central position inside the cell (1), with one or more antennas (3) of each cell are arranged to cover the area of the cell (1) for communicating with communication devices inside the cell (5), with the steps of:
▪ selecting a plurality of non-adjacent cells as central cells (8);
▪ for each central cell (8)
∘ in base stations (2) of cells that are adjacent to the central cell (8), arranging one or more antennas (3) to be directed towards the central cell (8);
∘ thereby defining a super-cell (9) comprising the central cell (8) and part of the adjacent cells, the outline of the super-cell (9) being defined by the base stations (2) of the adjacent cells, and antennas (3) of the super-cell (9) comprising the antennas (3) of the adjacent cells that are directed towards the central cell (8),
∘ providing a common processing system (6) to coordinate the emanation of radiation by the antennas (3) of the adjacent cells that are directed towards the central cell (8) of the super-cell (9) so as to communicate with one or more communication devices (5) located within the central cell (8) of the super-cell (9);
∘ wherein the signals from the antennas (3) of the super-cell (9) use at least a same channel resource.

2. The method of claim 1, with the further step of:
▪ in the super-cell (9), using an antenna (3) of the central cell (8) to communicate, in coordination or cooperation with the antennas (3) of the adjacent cells, with the one or more communication device (5)

3. The method of claim 1, with the further step of:
▪ in the super-cell (9), not using an antenna (3) of the central cell (8) to communicate, in coordination or cooperation with the antennas (3) of the adjacent cells, with the one or more communication device (5)

4. The method of claim 1 or claim 3, wherein, in the super-cell (9), the antenna (3) or antenna array of the central cell (8) is an essentially omni directional antenna or antenna array.

5. The method of one of the claims 1 to 4, with the further step of:
▪ in the adjacent cells, reconfiguring the base stations (2e) by replacing omnidirectional antennas or antenna arrays (3) by directional antennas or antenna arrays (3) transmitting and receiving in sectors.

6. The method of one of the claims 1 to 5, wherein in the initial state antennas (3) in adjacent cells are oriented so as to not point toward each other, and in the reconfigured state, antennas or antenna arrays (3) are oriented to point towards the centre of the super-cell (9).

7. The method of one of the claims 1 to 6, with the further step of:
▪ deploying, in the base stations (2e) of the adjacent cells, separate antennas or antenna arrays (3), with each antenna or antenna array (3) being associated with one super-cell (9), and the angle or sector covered by this antenna or antenna array (3) being adjusted to lie within this super-cell (9).

8. The method of one of the claims 1 to 7, with the step of:
▪ in the super-cell (9), using the antennas (3) of the super-cell (9) to increase the data rate or to optimise the distribution of the data rate in communicating to the one or more communication devices (5) inside the super-cell (9), while maintaining essentially the same transmission power as in the initial state.

9. The method of claim 8, wherein optimizing the distribution of the data rate is done by maximising the minimum data rate of communication over a plurality of the communication devices (5).

10. The method of one of the claims 1 to 7, with the step of:
▪ in the super-cell (9), using the antennas (3) of the central cell (8) in cooperation with the antennas (3) of the adjacent cells to increase failure tolerance within the super-cell (9).

11. The method of one of the claims 1 to 7, with the step of:
▪ reducing, in the super-cell (9), the transmitting power of the antennas (3) of the super-cell (9), in particular while maintaining essentially the same quality of service as in the initial state.

12. The method of one of the preceding claims, wherein the same channel resources used by the signals of cooperating antennas (3) in the super-cell (9) are common channels of a time division multiplex, frequency division multiplex or code division multiplex communication scheme.

13. The method of one of the preceding claims, with the step of:
▪ the common processing system (6) determining precoding information for weighting the signals of the antennas (3) of the super-cell (9).

## Patentansprüche

1. Verfahren zur Bereitstellung eines zellularen Kommunikationsnetzwerks, aufweisend das Rekonfigurieren eines zellularen Kommunikationsnetzwerks, wobei das zellulare Kommunikationsnetzwerk in einem Anfangszustand (10) Zellen (1) aufweist, wobei jede Zelle (1) eine Basisstation (2) aufweist, die sich in einer im Wesentlichen zentralen Position innerhalb der Zelle (1) befindet, wobei eine oder mehr Antennen (3) jeder Zelle zum Versorgen des Bereichs der Zelle (1) zum Kommunizieren mit Kommunikationsgeräten innerhalb der Zelle (5) angeordnet sind, mit den folgenden Schritten:
- Auswählen von mehreren nichtbenachbarten Zellen als zentrale Zellen (8);
- für jede zentrale Zelle (8):
∘ in Basisstationen (2) von Zellen, die den zentralen Zellen (8) benachbart sind, Anordnen von einer oder mehr Antennen (3), so dass sie zur zentralen Zelle (8) hin gerichtet sind;
∘ dadurch Definieren einer Superzelle (9), die die zentrale Zelle (8) und einen Teil der benachbarten Zellen aufweist, wobei die Außenlinie der Superzelle (9) durch die Basisstationen (2) der benachbarten Zellen definiert ist, und wobei Antennen (3) der Superzelle (9) die Antennen (3) der benachbarten Zellen aufweisen, die zur zentralen Zelle (8) hin gerichtet sind,
∘ Vorsehen eines gemeinsamen Verarbeitungssystems (6) zum Koordinieren der Ausstrahlung durch die Antennen (3) der benachbarten Zellen, die zur zentralen Zelle (8) der Superzelle (9) hin gerichtet sind, um mit einem oder mehr Kommunikationsgeräten (5) zu kommunizieren, welche sich innerhalb der zentralen Zelle (8) der Superzelle (9) befinden;
∘ wobei die Signale von den Antennen (3) der Superzelle (9) mindestens eine gleiche Kanalressource verwenden.

2. Verfahren nach Anspruch 1, mit dem weiteren Schritt:
- in der Superzelle (9), Verwenden einer Antenne (3) der zentralen Zelle (8) zum Kommunizieren, in Koordination oder Zusammenwirkung mit den Antennen (3) der benachbarten Zellen, mit dem einen oder mehr Kommunikationsgeräten (5).

3. Verfahren nach Anspruch 1, mit dem weiteren Schritt:
- in der Superzelle (9), Nichtverwenden einer Antenne (3) der zentralen Zelle (8) zum Kommunizieren, in Koordination oder Zusammenwirkung mit den Antennen (3) der benachbarten Zellen, mit dem einen oder mehr Kommunikationsgeräten (5).

4. Verfahren nach Anspruch 1 oder 3, wobei, in der Superzelle (9), die Antenne (3) oder Antennenanordnung der zentralen Zelle (8) eine im Wesentlichen omnidirektionale Antenne oder Antennenanordnung ist.

5. Verfahren nach einem der Ansprüche 1 bis 4, mit dem weiteren Schritt:
- in den benachbarten Zellen, Rekonfigurieren der Basisstationen (2e) durch Ersetzen von omnidirektionalen Antennen oder Antennenanordnungen (3) durch gerichtete Antennen oder Antennenanordnungen (3), die in Sektoren übertragen und empfangen.

6. Verfahren nach einem der Ansprüche 1 bis 5, wobei im Anfangszustand Antennen (3) in benachbarten Zellen derart ausgerichtet sind, dass sie nicht zueinander hin zeigen, und im rekonfigurierten Zustand Antennen oder Antennenanordnungen (3) derart ausgerichtet sind, dass sie zum Zentrum der Superzelle (9) hin zeigen.

7. Verfahren nach einem der Ansprüche 1 bis 6, mit dem weiteren Schritt:
- Bereitstellen, in den Basisstationen (2e) der benachbarten Zellen, von separaten Antennen oder Antennenanordnungen (3), wobei jede Antenne oder Antennenanordnung (3) mit einer Superzelle (9) assoziiert wird und der Winkel oder Sektor, der durch diese Antenne oder Antennenvorrichtung (3) versorgt wird, derart eingestellt wird, dass er innerhalb dieser Superzelle (9) liegt.

8. Verfahren nach einem der Ansprüche 1 bis 7, mit dem Schritt:
- in der Superzelle (9), Verwenden der Antennen (3) der Superzelle (9) zum Erhöhen der Datenrate oder zum Optimieren der Verteilung der Datenrate beim Kommunizieren mit dem einen oder mehr Kommunikationsgeräten (5) innerhalb der Superzelle (9), während im Wesentlichen dieselbe Übertragungsleistung wie im Anfangszustand beibehalten wird.

9. Verfahren nach Anspruch 8, wobei das Optimieren der Verteilung der Datenrate durch Maximieren der Minimaldatenrate von Kommunikation über mehrere der Kommunikationsgeräte (5) erfolgt.

10. Verfahren nach einem der Ansprüche 1 bis 7, mit dem Schritt:
- in der Superzelle (9), Verwenden der Antennen (3) der zentralen Zelle (8) in Zusammenwirkung mit den Antennen (3) der benachbarten Zellen zum Erhöhen von Fehlertoleranz innerhalb der Superzelle (9).

11. Verfahren nach einem der Ansprüche 1 bis 7, mit dem Schritt:
- Verringern, in der Superzelle (9), der Übertragungsleistung der Antennen (3) der Superzelle (9), insbesondere während im Wesentlichen dieselbe Dienstqualität wie im Anfangszustand beibehalten wird.

12. Verfahren nach einem der vorhergehenden Ansprüche, wobei dieselben Kanalressourcen, die durch die Signale von zusammenwirkenden Antennen (3) in der Superzelle (9) verwendet werden, gemeinsame Kanäle eines Zeitmultiplex-, Frequenzmultiplex- oder Codemutiplexkommunikationsschemas sind.

13. Verfahren nach einem der vorhergehenden Ansprüche, mit dem Schritt:
- Bestimmen, durch das gemeinsame Verarbeitungssystem (6), von Vorcodierungsinformation zum Gewichten der Signale der Antennen (3) der Superzelle (9).

## Revendications

1. Procédé de déploiement d'un réseau cellulaire de communication, comprenant l'étape qui consiste à reconfigurer un réseau cellulaire de communication et dans lequel le réseau cellulaire de communication comprend à l'état initial (10) des cellules (1), chaque cellule (1) comprenant un poste de base (2) situé en une position essentiellement centrale dans la cellule (1), une ou plusieurs antennes (3) de chaque cellule étant agencées de manière à couvrir la superficie de la cellule (1) en vue de permettre la communication avec des dispositifs de communication situés à l'intérieur de la cellule (5), le procédé comprenant les étapes qui consistent à :
- sélectionner plusieurs cellules non contiguës comme cellules centrales (8),
- pour chaque cellule centrale (8) :
- dans les postes de base (2) de cellules contiguës à la cellule centrale (8), agencer une ou plusieurs antennes (3) de telle sorte qu'elles soient orientées vers la cellule centrale (8),
- définir ainsi une super-cellule (9) qui comprend la cellule centrale (8) et une partie des cellules contiguës, le périmètre de la super-cellule (9) étant défini par les postes de base (2) des cellules contiguës et les antennes (3) de la super-cellule (9) comprenant les antennes (3) des cellules contiguës qui sont orientées vers la cellule centrale (8),
- prévoir un système commun (6) de traitement qui coordonne les rayonnements émis par les antennes (3) des cellules contiguës qui sont orientées vers la cellule centrale (8) de la super-cellule (9) de manière à communiquer avec un ou plusieurs des dispositifs de communication (5) situés à l'intérieur de la cellule centrale (8) de la super-cellule (9),
- les signaux des antennes (3) de la super-cellule (9) utilisant au moins un même source de canal.

2. Procédé selon la revendication 1, comprenant en outre l'étape qui consiste à :
- dans la super-cellule (9), utiliser une antenne (3) de la cellule centrale (8) pour communiquer avec un ou plusieurs des dispositifs de communication (5) en coordination ou en coopération avec les antennes (3) des cellules contiguës.

3. Procédé selon la revendication 1, comprenant en outre l'étape qui consiste à :
- dans la super-cellule (9), ne pas utiliser une antenne (3) de la cellule centrale (8) pour communiquer avec un ou plusieurs des dispositifs de communication (5) en coordination ou en coopération avec les antennes (3) des cellules contiguës.

4. Procédé selon la revendication 1 ou la revendication 3, dans lequel l'antenne (3) ou la batterie d'antennes de la cellule centrale (8) de la super-cellule (9) sont essentiellement une antenne omnidirectionnelle ou une batterie (3) d'antennes omnidirectionnelles.

5. Procédé selon l'une des revendications 1 à 4, comprenant en outre l'étape qui consiste à :
- dans les cellules contiguës, reconfigurer les postes de base (2e) en remplaçant les antennes omnidirectionnelles ou les batteries (3) d'antennes omnidirectionnelles par des antennes directionnelles ou les batteries (3) d'antennes directionnelles émettant et recevant en secteurs.

6. Procédé selon l'une des revendications 1 à 5, dans lequel à l'état initial, les antennes (3) de cellules contiguës sont orientées de telle sorte qu'elles ne pointent pas les unes vers les autres et à l'état reconfiguré, les antennes ou les batteries (3) d'antennes sont orientées de manière à pointer vers le centre de la super-cellule (9).

7. Procédé selon l'une des revendications 1 à 6, comprenant en outre l'étape qui consiste à :
- séparer les antennes ou les batteries (3) d'antennes des postes de base (2e) des cellules contiguës de telle sorte que chaque antenne ou batterie (3) d'antennes soit associée à une super-cellule (9) et que l'angle ou le secteur couvert par cette antenne ou batterie (3) d'antennes soient ajustés de manière à être situés à l'intérieur de cette super-cellule (9).

8. Procédé selon l'une des revendications 1 à 7, comprenant l'étape qui consiste à :
- utiliser les antennes de la super-cellule (9) de manière à augmenter le débit de données ou optimiser la répartition du débit de données de la communication et les ou les dispositifs de communication (5) situés à l'intérieur de la super-cellule (9) tout en maintenant essentiellement inchangée la puissance de transmission de l'état initial.

9. Procédé selon la revendication 8, dans lequel l'optimisation de la répartition du débit de données est réalisée en maximisant le débit minimum de données de la communication sur plusieurs dispositifs de communication (5).

10. Procédé selon l'une des revendications 1 à 7, comprenant l'étape qui consiste à :
- utiliser les antennes (3) de la cellule centrale (8) pour augmenter la tolérance aux défauts à l'intérieur de la super-cellule (9) en coopération avec les antennes (3) des cellules contiguës.

11. Procédé selon l'une des revendications 1 à 7, comprenant l'étape qui consiste à :
- réduire la puissance de transmission des antennes (3) de la super-cellule (9), en particulier en maintenant essentiellement la qualité de service de l'état initial.

12. Procédé selon l'une des revendications précédentes, dans lequel les mêmes ressources de canal utilisées par les signaux des antennes (3) qui coopèrent dans la super-cellule (9) sont des canaux communs schéma de communication par multiplexage à division du temps, par multiplexage à division des fréquences ou par multiplexage à division de codes.

13. Procédé selon l'une des revendications précédentes, comprenant l'étape qui consiste à :
- faire déterminer par le système commun (6) de traitement le pré-codage des informations en vue de pondérer les signaux des antennes (3) de la super-cellule (9).
